# EUROPÄISCHE PATENTSCHRIFT

(11) **EP 0 643 244 B1**
(45) Veröffentlichungstag und Bekanntmachung des Hinweises auf die Patenterteilung: **21.01.1998**
(21) Anmeldenummer: 94111086.8
(22) Anmeldetag: 16.07.1994
(51) Int. Cl.: F16K 1/54

(54) **Ventil**
Valve
Valve

(30) Priorität: 15.09.1993 DE 4331417
(43) Veröffentlichungstag der Anmeldung: 15.03.1995
(73) Patentinhaber: WABCO GmbH, 30453 Hannover (DE)
(72) Erfinder: Henken, Immanuel, D-30880 Laatzen (DE); Langner, Horst, D-31319 Sehnde (DE)
(74) Vertreter: Schrödter, Manfred, Dipl.-Ing.

(56) Entgegenhaltungen:
- BE-A- 366 114
- DE-A- 2 525 243
- FR-A- 1 515 245
- FR-A- 1 526 193
- US-A- 2 007 051

## Beschreibung

Die Erfindung betrifft ein von einer Stirnfläche eines Ventilkörpers und dem Mündungsbereich eines Durchbruchs in einem Gegenstück gebildetes Ventil nach dem Oberbegriff des Patentanspruchs.

Ein solches Ventil ist aus der FR-A-1 515 245 bekannt.

Derartige Ventile werden in Kurzform "Sitzventil" genannt und sind sowohl für gasförmige als auch für flüssige Strömungsmittel gebräuchlich.

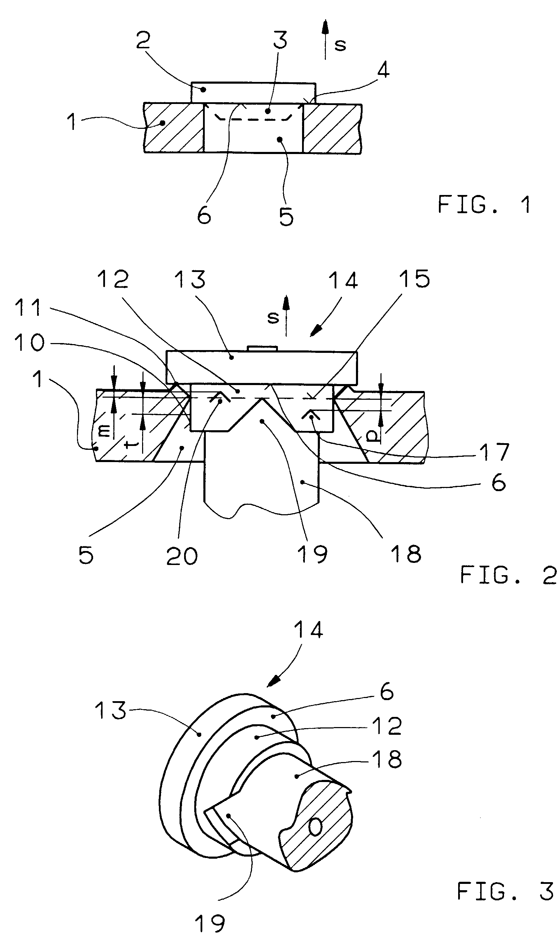

Fig. 1 zeigt schematisch in durchgezogenen Linien eine seit langem gebräuchliche Ausführung eines Sitzventils. Eine Stirnfläche (6) eines vorzugsweise runden Ventilkörpers (2) bildet mit dem Mündungsbereich (4) eines Durchbruchs (5) in einem Gegenstück (1) das Ventil (2, 4). Das Ventil (2, 4) ist in geschlossenem Zustand dargestellt. In diesem Zustand liegt die Stirnfläche (6) dichtend auf dem Mündungsbereich (4) auf. Das Ventil (2, 4) wird durch einen auf geeignete und bekannte Weise hervorgerufenen Öffnungshub s des Ventilkörpers (2), wie er durch einen Pfeil angedeutet ist, geöffnet und durch einen Schließhub des Ventilkörpers in Gegenrichtung geschlossen.

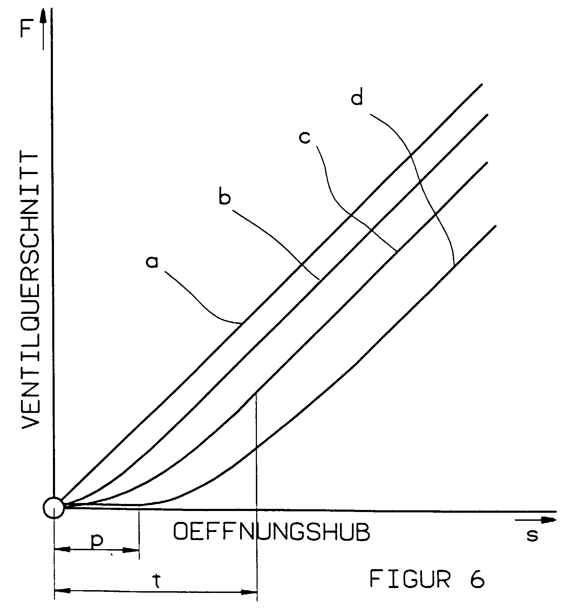

Fig. 6 zeigt als Linie a den Ventilquerschnitt F, d. h. den Durchlaßquerschnitt, des Ventils (2, 4) als Funktion des Öffnungshubs s. Der Ventilquerschnitt F ist eine dem Öffnungshub s proportionale Zylinderfläche. Die Linie a ist deshalb eine Gerade. Wegen des vom Öffnungsbeginn an gleich bleibenden Gradienten dieser Geraden ermöglicht das Ventil (2, 4) schon im Bereich kleiner Öffnungshübe s einen erheblichen Strömungsmitteldurchsatz. Eine solche, an sich wünschenswerte, Charakteristik ist für einige Anwendungsfälle nachteilig. Ein solcher Fall ist beispielsweise gegeben, wenn das Ventil (2, 4) in einem Regelkreis zur feinfühligen Einstellung des Strömungsmitteldurchsatzes und/oder des Strömungsmitteldruckes eingesetzt werden soll.

Deshalb ist das Ventil (2, 4) durch die Anordnung eines in den Durchbruch (5) eintauchenden Ansatzes auf der Stirnfläche (6) fortgebildet worden. Ein solcher Ansatz (3) ist gestrichelt in Fig. 1 eingezeichnet. Der Ansatz (3) ist konisch. Durch diese Maßnahme wird bei im übrigen unveränderten Bedingungen ein Verlauf des Ventilquerschnitts F gemäß Linie b in Fig. 6 erzielt. Diese Charakteristik weist im Bereich geringer Öffnungshübe s einen erheblich geringeren Gradienten als die Linie a auf, bewirkt dadurch eine deutliche Minderung des anfänglichen Strömungsmitteldurchsatzes und verbessert damit das Betriebsverhalten kritischer Anwendungsfälle bzw. ermöglicht den Einsatz des Ventils (2, 4) in kritischen Anwendungsfällen.

Nun gibt es aber Anwendungsfälle, in denen auch die Fortbildung des Ventils (2, 4) durch einen Ansatz auf der Stirnfläche (6) zur Sicherstellung eines befriedigenden Betriebsverhaltens nicht ausreicht.

Eine weitere Minderung des Strömungsmitteldurchsatzes bei kleinen Öffnungshüben des Ventilkörpers, also des anfänglichen Strömungsmitteldurchsatzes, wird bei dem bekannten Ventil durch die umlaufende Kante, den Führungsbereich, die Ansenkung und die dort beschriebene Ausbildung bzw. gegenseitige Anordnung dieser Komponenten erzielt.

Mit den gleichen Mitteln erzielen die Ventile nach den Fig. 3 und 4 der DE-A-2 525 243 und nach der US-A-2 007 051 eine weitere Minderung des anfänglichen Strömungsmitteldurchsatzes.

Der Erfindung liegt die Aufgabe zugrunde, eine kostengünstig herstellbare Ausgestaltung des eingangs genannten Ventils vorzuschlagen.

Diese Aufgabe wird durch die in dem Patentanspruch angegebene Erfindung gelöst.

Die Erfindung läßt sich beispielsweise in einer Bremsanlage mit einer elektromagnetisch betätigbaren Ventileinrichtung mit hohen Anforderungen an die Regelgüte, wie sie in der EP-A-0 305 710 beschrieben ist, einsetzen.

Die Erfindung wird nunmehr unter durchgehend einheitlicher Verwendung von gleichen Bezugszeichen für Bauelemente mit gleichen Funktionen anhand zeichnerischer Darstellungen erläutert, worin
- Fig. 1 bis Fig. 3: der Erörterung des Stands der Technik und der Grundlagen der Erfindung dienen,
- Fig. 4 und Fig. 5: eine Ausführung eines erfindungsgemäßen Ventils,
- Fig. 6: Ventilkennlinien
zeigen

In Fig. 2 ist die der Ventilbildung dienende Stirnfläche (6) an einem Ventilteller (13) angebracht. Von der Stirnfläche (6) geht der in den Durchbruch (5) eintauchende Ansatz (12) aus. Der Ventilkörper (14) besteht außer aus dem Ventilteller (13) und dem Ansatz (12) aus einem Schaft (18), auf den im vorliegenden Zusammenhang nicht näher eingegangen zu werden braucht. Der Ventilkörper (14) läßt sich als Oberteil des in der bereits erwähnten EP-A-0 305 710 erwähnten Stellglieds (dort 42) verwenden.

Der der Ventilbildung dienende Mündungsbereich ist in dieser Figur als ein die Mündung des Durchbruchs (5) einfassender erhabener Ventilsitz (11) ausgebildet, der mit der Stirnfläche (6) des Ventilkörpers (14) das Ventil (11, 14) bildet. Derartige Ventilsitze werden häufig als Mündungsbereich des Durchbruchs, aber zusätzlich auch an der Stirnfläche des Ventilkörpers oder auch nur an dieser Stirnfläche eingesetzt, weil sie die Dichtheit des Ventils verbessern und eine definierte Dichtlinie bzw. Dichtfläche und damit eine definierte Größe der Ventilfläche schaffen. Der Ventilsitz und/oder die mit ihm zusammenarbeitende Gegenfläche bestehen zur weiteren Verbesserung der Ventildichtheit häufig aus einem Elastomer.

Auf der Innenfläche des Durchbruchs (5) ist eine parallel zu der Stirnfläche (6) des Ventilkörpers (14) umlaufende Kante (15) ausgebildet. Die Kante (15) ist gestrichelt gezeichnet, weil sie in der Darstellung hinter dem Ansatz (12) verläuft.

Auf der Mantelfläche des Ansatzes (12) ist ein Führungsbereich (10) ausgebildet, der die Kante (15) des Durchbruchs (5) mit Spielpassung durchdringt. Der Führungsbereich (10) erstreckt sich, von der Stirnfläche (6) aus gesehen, ab der Kante (15) über eine Länge t. Die Länge t definiert, wie aus der weiter unten folgenden Funktionsbeschreibung hervorgeht, den Bereich kleiner Öffnungshübe s des Ventilkörpers (14) bzw. den anfänglichen Öffnungsbereich des Ventils (11, 14). Jenseits der Länge t ist die Mantelfläche des Ansatzes (12) kleiner als der Führungsbereich (10) und beliebig ausgebildet. Der Ansatz (12) kann bei der Länge t auch völlig abbrechen.

Unter "Spielpassung" ist zu verstehen, daß der Führungsbereich (10) des Ansatzes (12) mit einem definierten engen Radialspiel in der Kante (15) des Durchbruchs (5) axial geführt ist. Eine solche Spielpassung ist bei einem Nenndurchmesser des Führungsbereichs (10) und der Kante (15) von D beispielsweise gegeben, wenn, je nach der Größenanordnung des Nenndurchmessers D, der Durchmesser des Führungsbereichs (10) um 0,01 D bis 0,1 D kleiner und der Durchmesser der Kante (15) um 0,01 D bis 0,1 D größer als der Nenndurchmesser D sind.

Zwecks bildlicher Hervorhebung der Kante (15) ist der Durchbruch (5) aus zwei aufeinander gestellten Kegelstümpfen bestehend dargestellt, deren Durchdringungslinie die Kante (15) bildet. In praktisch ausgeführten Ventilen wird die Kante (15) so deutlich kaum feststellbar sein. Vielmehr werden praktisch ausgeführte Ventile in der Regel in dem Durchbruch einen dem Führungsbereich (10) des Ansatzes (12) komplementären Führungsbereich aufweisen. Die der Kante (15) entsprechende Kante wird bei diesen Ventilen in der Regel die körperlich kaum feststellbare mündungsseitige Begrenzungslinie des Führungsbereichs in dem Durchbruch sein.

In den Ansatz (12) ist eine Ansenkung in Form einer Nut (19) eingearbeitet. Die Seitenansicht der Nut (19) ist ein Dreieck, dessen Spitze der Stirnfläche (6) zugewandt und dessen Grundlinie dem der Stirnfläche (6) abgewandten Ende des Ansatzes (12) zugewandt sind. Aufgrund dieser Formgebung steht die Nut (19) beispielhaft für eine Ansenkung mit sich von der Stirnfläche (6) entfernender Erstreckung und mit mit zunehmendem Abstand von der Stirnfläche (6) sich erweiterndem Querschnitt. Die Nut (19) muß wenigstens bis zur Länge t durchlaufen, erstreckt sich aber im Ausführungsbeispiel der einfacheren Fertigung halber bis zu dem der Stirnfläche (6) abgewandten Ende des Ansatzes (12).

Fig. 3 zeigt zur Verdeutlichung der Nut (19) den Ventilkörper (14) in perspektivischer Ansicht.

Die Nut (19) ist so angeordnet, daß bei geschlossenem Ventil (11, 14) ihre Spitze die umlaufende Kante (15) des Durchbruchs (5) gerade tangiert.

Bei der nunmehr folgenden Erläuterung der Funktionsweise dieses Ventils bleibt ein etwa auftretender wirkungsloser bzw. "leerer" Öffnungshub des Ventilkörpers (14) unberücksichtigt. Ein derartiger Öffnungshub kann durch die Rückbildung von Verformungen auftreten, die beim Schließen des Ventils (11, 14) auftreten und insbesondere auf Elastizitäten des Ventilsitzes (11) und/oder der Stirnfläche (6) zurückzuführen sein können.

Das Ventil kann mit gleicher Wirkung, aus der Sicht des Betrachters, von oben her als auch von unten her durchströmt werden.

Der mögliche Bereich der Öffnungshübe des Ventilkörpers (14) unterteilt sich prinzipiell in zwei Teilbereiche. Der erste Teilbereich, das ist der Bereich kleiner Öffnungshübe s bzw. der anfängliche Öffnungsbereich des Ventils (11, 14), gilt für Öffnungshübe s zwischen 0 und einschließlich t. Der zweite Teilbereich, der Bereich größerer Öffnungshübe s, schließt sich bei weiter wachsendem Öffnungshub s an den ersten Teilbereich an.

In dem ersten Teilbereich, also dem Bereich geringer Öffnungshübe s, setzt sich der den Strömungsmitteldurchsatz bestimmende Ventilquerschnitt F zusammen aus dem Querschnitt des zwischen der Kante (15) des Durchbruchs (5) und dem Führungsbereich (10) gebildeten Ringspalts sowie dem verfügbaren Querschnitt der Nut (19). Der Querschnitt des Ringspalts ist unerwünscht, aber unvermeidlich, weil auf die Spielpassung zwischen der Kante (15) und dem Führungsbereich (10) im Interesse der Leichtgängigkeit des Ventilkörpers (14) in dem Durchbruch (5) nicht verzichtet werden kann. Die Spielpassung muß jedoch so optimiert werden, daß dieser Querschnitt möglichst gering ist. Dies ist beispielsweise mit den weiter oben angegebenen Bemessungen der Fall.

Ein Querschnitt der Nut (19) ist in dem vorstehend erwähnten Sinn verfügbar, wenn die Spitze der Nut (19) die Kante (15) in Richtung des Ventilsitzes (11) überfahren hat. Bei der im Ausführungsbeispiel vorgesehenen, die Kante (15) tangierenden, Anordnung der Spitze steht vom Wert 0 des Öffnungshubes s ab ein Querschnitt der Nut (19) zur Verfügung. Dieser Querschnitt ist zunächst sehr gering. Auch die Erweiterungsrate dieses Querschnitts mit wachsendem Öffnungshub s ist durch entsprechende Wahl des Spitzenwinkels der Nut (19) und/oder des Verlaufs ihrer radialen Tiefe gering. Das Ventil ermöglicht deshalb für Öffnungshübe s zwischen 0 und t geringe Ventilquerschnitte.

Die Linie c in Fig. 6 zeigt in dem Bereich 0 < s ≤ t schematisch, welche deutliche Verringerung des Ventilquerschnitts F bei kleinen Öffnungshüben s das Ventil bei im übrigen unveränderten Bedingungen gegenüber den Linien a und b des früheren Stands der Technik ermöglicht.

In dem anschließenden zweiten Teilbereich, also dem Bereich größerer Öffnungshübe s, wird die vorstehend beschriebene Bestimmung des Ventilquerschnitts F durch den Führungsbereich (10), die Kante (15) und die Nut (19) ganz oder weitgehend unwirksam. Der Verlauf der Linie c in diesem Bereich hängt von der Bemessung des Ansatzes (12) jenseits der Länge t ab. Für das dargestellte Ventil ist eine Bemessung derart angenommen, daß sich der Verlauf der Linie c in dem zweiten Teilbereich an den Verlauf der Linie c in dem ersten Teilbereich stetig anschließt. Es sind aber auch unstetige, mit anderen Worten sprunghafte, Übergänge zwischen den beiden Teilbereichen möglich.

Es ist auch möglich, die Länge t so festzulegen, daß sie den gesamten möglichen Bereich des Öffnungshubes s abdeckt. In einem solchen Fall tritt ein zweiter Teilbereich gar nicht auf. Der mögliche Bereich der Öffnungshübe s wird oft durch einen Anschlag für den Ventilkörper (14) bestimmt.

Durch die Lage der Spitze der Nut (19) bei geschlossenem Ventil (11, 14) relativ zu der Kante (15) ist es möglich, den Verlauf des Ventilquerschnitts F, insbesondere beim Öffnungsbeginn, zu variieren.

Mit (20) ist eine Anordnung der Nut (19) angedeutet, bei der die Spitze der Nut (19) bei geschlossenem Ventil (11, 14) die Kante (15) um das Maß m in Richtung der Stirnfläche (6) überschreitet. Durch diese Anordnung wird in Fig. 6 eine Annäherung der Linie c an die Linie b, also eine Verlagerung des Ventilquerschnittverlaufs F zu größeren Werten, bewirkt.

Mit (17) ist eine Anordnung der Nut (19) angedeutet, bei der die Spitze der Nut (19) bei geschlossenem Ventil (11, 14), von der Stirnfläche (6) aus gesehen, um ein Maß p jenseits der Kante (15) liegt. Diese Anordnung nutzt die weiter oben als nachteilig bezeichnete Existenz des Ringspalts zwischen Kante (15) und Führungsbereich (10) zu einem Vorteil. Bei dieser Anordnung steht als Ventilquerschnitt F bis zu einem Öffnungshub s = p nur der Querschnitt des Ringspalts zur Verfügung. Nur für Öffnungshübe s von p bis einschließlich t stellt die Nut (19) einen zusätzlichen Querschnitt zur Verfügung. Mit dieser Anordnung läßt sich, wie Linie d in Fig. 6 verdeutlicht, ein besonders langsames Öffnen des Ventils (11, 14), sozusagen ein "schleichendes" Öffnen, bewirken. Linie d in Fig. 6 stellt in dem Bereich 0 < s ≤ p den (konstanten) Querschnitt des Ringspalts als Ventilquerschnitt F dar.

Der Verlauf des Ventilquerschnitts F läßt sich auch durch den Verlauf des Querschnitts der Nut (19), beispielsweise durch konvexe oder konkave Krümmung der Nutflanken und/oder durch progressiven oder degressiven Verlauf der Nuttiefe in Richtung quer zum Öffnungshub s variieren.

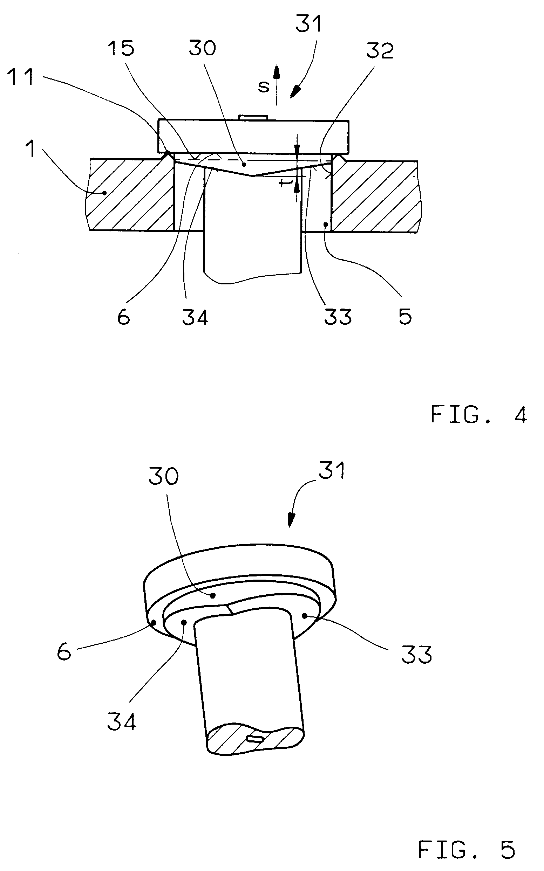

Fig. 4 zeigt ein Ausführungsbeispiel der Erfindung, in dem die Ansenkung des mit (30) bezeichneten Ansatzes als zwei sich gegenüberstehende, zu der Stirnfläche (6) geneigte, Abschlußflächen (33) und (34) an dem der Stirnfläche (6) abgewandten Ende des Ansatzes (30) ausgebildet ist. In der dargestellten Seitenansicht des mit (31) bezeichneten Ventilkörpers verlaufen die Abschlußflächen (33) und (34) wie ein Spitzdach. Die Länge t des in diesem Ausführungsbeispiel nicht näher bezeichneten Führungsbereiches des Ansatzes (30) stellt sich als Firsthöhe bzw. Scheitelhöhe des Spitzdaches über der in dem Durchbruch (5) umlaufenden Kante (15) dar.

Die Innenfläche des Durchbruchs (5) enthält in diesem Fall einen dem Führungsbereich an dem Ansatz (30) komplementären Führungsbereich, der wenigstens die Länge t aufweist.

Die umlaufende Kante (15) des Durchbruchs (5) ist in diesem Fall die Übergangskante von dem Führungsbereich des Durchbruchs und einem auf den Ventilsitz (11) zuführenden Kegelstumpf. Der Spitze der Nut (19) des früheren Ausführungsbeispiels entsprechen in diesem Ausführungsbeispiel die in der Zeichnung links und und rechts befindlichen, der Stirnfläche (6) nächsten Punkte der Abschlußflächen (33) und (34).

Fig. 5 zeigt zur Verdeutlichung der Abschlußflächen (33) und (34) eine perspektivische Ansicht des Ventilkörpers (31).

Wenn die der Stirnfläche (6) nächstliegenden Punkte der Abschlußflächen (33) und (34) beim Öffnen des hier mit (11, 31) zu bezeichnenden Ventils die umlaufende Kante (15) überschritten haben, bieten die Abschlußflächen (33) und (34) mit zunehmendem Öffnungshub s in Verbindung mit der Kante (15) einen prinzipiell gleichen Querschnittsverlauf wie die Nut (19) des Ventils nach den Fig 2 und 3. Deshalb können, je nachdem, ob mit dem Ausführungsbeispiel eine Charakteristik nach Linie c oder nach Linie d in Fig. 6 angestrebt wird, die der Stirnfläche (6) nächsten Punkte der Abschlußflächen (33) und (34) bei geschlossenem Ventil (11, 31) von der Stirnfläche (6) aus gesehen, vor, auf oder jenseits der umlaufenden Kante (15) liegen. Analog zum Ventil nach den Fig 2 und 3 läßt sich der Verlauf des Ventilquerschnitts auch durch konvexe oder konkave Krümmungen der Abschlußflächen (33) und (34) variieren.

Der Ventilkörper mit den geneigten Abschlußflächen (33) und (34) des Ansatzes (30) läßt sich mit relativ geringem Aufwand herstellen. Das Ausführungsbeispiel nach den Fig. 4 und 5 stellt deshalb eine kostengünstige Lösung dar.

Im übrigen gilt, sofern sich aus dem vorstehenden nichts Widersprechendes ergibt, das für das Ventil nach den Fig 2 und 3 Gesagte direkt oder in entsprechender Anwendung für das Ausführungsbeispiel nach den Fig. 4 und 5 mit.

Über die dargestellte Ausbildung hinaus kann die Ansenkung in dem Ansatz auf jede beliebige und geeignete Art ausgeführt werden.

Die flächenhafte Ausbildung der Ansenkung, wie sie im Ausführungsbeispiel nach den Fig. 4 und 5 dargestellt ist, kann auch durch mehr als zwei Flächen dargestellt werden.

Grundsätzlich ist es zweckmäßig, die Ansenkungen in solcher Zahl vorzusehen und so auf dem Ansatz zu verteilen, daß die Strömung durch das Ventil keine Querkräfte auf den Ventilkörper hervorruft. Querkräfte können zu einem Kontakt zwischen dem Ventilkörper und dem Durchbruch führen, dadurch die Leichtgängigkeit des Ventilkörpers verschlechtern und damit das Ansprechverhalten des Ventils nachteilig beeinflussen.

Abschließend sei darauf hingewiesen, daß sich der Schutzbereich der vorliegenden Erfindung nicht in dem Ausführungsbeispiel und den dazu erwähnten Fortbildungsmöglichkeiten erschöpft, sondern alle Ausgestaltungen umfaßt, deren Merkmale sich dem Patentanspruch unterordnen.

## Patentansprüche

1. Von einer Stirnfläche (6) eines Ventilkörpers (31) und dem Mündungsbereich (11) eines Durchbruchs (5) in einem Gegenstück (1) gebildetes Ventil (11, 31)
wobei
von der im geschlossenen Zustand des Ventils (11, 31) dichtend auf dem Mündungsbereich (11) aufliegenden Stirnfläche (6) ein in den Durchbruch (5) eintauchender Ansatz (30) ausgeht,
der Durchbruch (5) eine umlaufende Kante (15) aufweist,
auf der Mantelfläche des Ansatzes (30) ein Führungsbereich (10) ausgebildet ist, der die Kante (15) mit Spielpassung durchdringt,
der Ansatz (30) wenigstens eine Ansenkung (33, 34) mit sich von der Stirnfläche (6) entfernender Erstreckung und mit mit zunehmendem Abstand von der Stirnfläche (6) sich erweiterndem Querschnitt aufweist,
die Ansenkung (33, 34) derart angeordnet ist, daß sie sich bei geschlossenem Ventil (11, 31), von der Stirnfläche (6) aus gesehen, wenigstens mit einem Teil jenseits der Kante (15) befindet und mit diesem Teil beim Öffnen des Ventils (11, 31) die Kante (15) wenigstens teilweise überfährt,
dadurch gekennzeichnet,
daß die Ansenkung als wenigstens zwei sich gegenüberstehende, zu der Stirnfläche (6) geneigte und sich schneidende, Abschlußflächen (33, 34) an dem der Stirnfläche (6) abgewandten Ende des Ansatzes (30) ausgebildet ist, wobei der Schnittbereich den von der Stirnfläche (6) am weitesten entfernten Bereich der Abschlußflächen (33, 34) bildet.

## Claims

1. Valve (11, 31) formed by an end face (6) of a valve body (31) and the mouth region (11) of an opening (5) in a counter-part (1),
wherein
from the end face (6) which in the closed state of the valve (11, 31) lies on the mouth region (11), forming a seal, there extends an extension piece (30) engaging the opening (5),
the opening (5) has a circumferential edge (15),
on the circumferential face of the extension piece (30) a guide region (10) is formed, which passes the edge (15) with a loose fit,
the extension piece (30) has at least one countersinking (33, 34) having an extent leading away from the end face (6) and having a cross-section that widens with increasing distance from the end face (6),
the countersinking (33, 34) is arranged so that, with the valve (11, 31) closed, viewed from the end face (6), it is located with at least a part on the other side of the edge (15) and with that part at least partially passes over the edge (15) as the valve (11, 31) opens,
characterised in that
the countersinking is constructed on the end of the extension piece (30) remote from the end face (6) in the form of at least two opposing intersecting terminating faces (33, 34) inclined towards the end face (6), the intersection region forming the region of the terminating faces (33, 34) furthest from the end face (6).

## Revendications

1. Robinet à soupape (11, 31) formé d'une surface frontale (6) d'une soupape (31) et de la zone de l'orifice (11) d'une découpe (5) dans une contre-pièce (1)
dans lequel
de la surface frontale (6), qui, à l'état fermé du robinet à soupape (11, 31), repose avec étanchéité sur la zone de l'orifice (11), dépasse un appendice (30) qui plonge dans la découpe (5),
la découpe (5) présente une arête périphérique (15),
sur la surface latérale de l'appendice (30) est formée une zone de guidage (10) qui passe à travers l'arête (15) avec un ajustement avec jeu,
l'appendice (30) présente au moins une fraisure (33, 34) dont l'extension se fait en s'éloignant de la surface frontale (6) et dont la section s'élargit à une distance croissante de la surface frontale (6),
la fraisure (33, 34) est disposée de façon que, le robinet à soupape (11, 31) étant fermé, vu de la surface frontale (6), elle se trouve avec au moins une partie en deçà de l'arête (15) et, par cette partie, lors de l'ouverture du robinet à soupape (11, 31), passe, au moins partiellement, au-delà de l'arête (15),
caractérisé
par le fait que la fraisure est formée, à l'extrémité de l'appendice (30) orientée dans le sens opposé à la surface frontale (6), sous forme d'au moins deux surfaces terminales (33, 34) opposées l'une à l'autre, inclinées par rapport à la surface frontale (6) et s'intersectant, la zone de l'intersection formant la zone des surfaces terminales (33, 34) qui est la plus éloignée de la surface frontale (6).
